# EUROPÄISCHE PATENTSCHRIFT

(11) **EP 1 913 452 B1**
(45) Veröffentlichungstag und Bekanntmachung des Hinweises auf die Patenterteilung: **11.08.2010**
(21) Anmeldenummer: 06777428.1
(22) Anmeldetag: 23.06.2006
(51) Int. Cl.: G05D 1/02, B60K 31/00

(54) **VERFAHREN ZUR ERKENNUNG EINES ABBIEGEVORGANGS UND FAHRERASSISTENZSYSTEM FÜR KRAFTFAHRZEUGE**
METHOD FOR RECOGNIZING A TURNING PROCESS, AND DRIVER ASSISTANCE SYSTEM FOR MOTOR VEHICLES
PROCEDE DE DETECTION D'UN PROCESSUS DE BIFURCATION ET SYSTEME D'ASSISTANCE A LA CONDUITE POUR VEHICULES AUTOMOBILES

(30) Priorität: 01.08.2005 DE 102005036049
(43) Veröffentlichungstag der Anmeldung: 23.04.2008
(73) Patentinhaber: ROBERT BOSCH GMBH, 70442 Stuttgart (DE)
(72) Erfinder: URBAN, Werner, 71665 Vaihingen/Enz (DE); HOFMANN, Holger, 74747 Ravenstein/Ot Merchingen (DE); GIBSON, Brendan, 70176 Stuttgart (DE)
(86) Internationale Anmeldenummer: PCT/EP2006/063481
(87) Internationale Veröffentlichungsnummer: WO 2007/014802

(56) Entgegenhaltungen:
- EP-A- 1 195 669
- DE-A1- 10 047 746
- DE-A1- 10 358 034

## Beschreibung

### Stand der Technik

### Die Erfindung betrifft ein Verfahren für ein Fahrerassistenzsystem eines Kraftfahrzeugs.

Ein typisches Beispiel für ein Fahrerassistenzsystem ist ein sogenanntes ACC-System (Adaptive Cruise Control). Darunter versteht man ein adaptives Geschwindigkeitsregelsystem, das in der Lage ist, die Geschwindigkeit des Fahrzeugs auf eine vom Fahrer gewählte Wunschgeschwindigkeit zu regeln und das zusätzlich ein Ortungssystem, beispielsweise ein Radarsystem., zur Ortung vorausfahrender Fahrzeuge aufweist und somit erforderlichenfalls in der Lage ist, die Geschwindigkeit des eigenen Fahrzeugs an die des vorausfahrenden Fahrzeugs, des sogenannten Zielobjekts, anzupassen. Solche Systeme sind bisher vorwiegend für den Einsatz auf Autobahnen konzipiert, es sind jedoch fortgeschrittene ACC-Systeme in Entwicklung, die auch für den Einsatz auf Landstraßen und sogar im Stadtverkehr geeignet sind.

Bei dem Zielobjekt für die Abstandsregelung handelt es sich in der Regel um ein unmittelbar vorausfahrendes Fahrzeug auf der von dem eigenen Fahrzeug fahrenden Fahrspur. Das System muß deshalb in der Lage sein zu erkennen, auf welcher Spur sich ein vorausfahrendes Fahrzeug befindet. Zu diesem Zweck wird ein winkelauflösender Radarsensor eingesetzt, mit dem nicht nur der Abstand und die Relativgeschwindigkeit des vorausfahrenden Fahrzeugs, sondern auch dessen Azimutwinkel und damit die Querposition in Bezug auf das eigene Fahrzeug gemessen werden kann.

Damit eine korrekte Spurzuordnung vorgenommen werden kann, muß außerdem der voraussichtliche Fahrbahnverlauf und damit der voraussichtliche Kurs des eigenen Fahrzeugs abgeschätzt werden. Für diese Kursprädiktion wird häufig die Gierrate des eigenen Fahrzeugs gemessen, beispielsweise mit Hilfe eines Gierratensensors, so daß ein gekrümmter Fahrbahnverlauf zumindest dann erkannt werden kann, wenn das eigene Fahrzeug bereits in die Kurve eingefahren ist. Ergänzend kann zur Kursprädiktion auch die Winkelgeschwindigkeit eines Kollektivs vorausfahrender Fahrzeuge herangezogen werden. Sofern das eigene Fahrzeug außerdem über ein Navigationssystem verfügt, ist es auch möglich, die digitale Karte des Navigationssystems zur Abschätzung des Fahrbahnverlaufes heranzuziehen.

Die Kursprädiktion bildet dann die Grundlage für die Bestimmung eines sogenannten Fahrschlauches, darunter versteht man einen Streifen auf der Fahrbahn, der etwas breiter ist als das eigene Fahrzeug und dem voraussichtlichen Kurs des Fahrzeugs folgt. Als Zielobjekt für die Abstandsregelung kommen dann nur Fahrzeuge in Betracht, die sich innerhalb dieses Fahrschlauches befinden.

Es ist bereits vorgeschlagen worden, die Breite oder die linken und rechten Grenzen des Fahrschlauches situationsabhängig zu variieren. Wenn sich das eigene Fahrzeug beispielsweise auf der äußersten linken Spur einer mehrspurigen Fahrbahn befindet, ist es zweckmäßig, den Fahrschlauch nach links zu erweitern, damit das Zielobjekt in einer Linkskurve nicht so leicht verloren geht, während andererseits auf der rechten Seite eine engere Fahrschlauchgrenze gewählt wird, damit sogenannte Nebenspurstörungen durch Fahrzeuge auf der rechten Nebenspur vermieden werden. Bei einer Fahrt auf der äußersten rechten Spur ist es entsprechend umgekehrt. Zur Entscheidung, auf welcher Spur einer mehrspurigen Fahrbahn sich das eigene Fahrzeug befindet, können wieder die Ortungsdaten eines Kollektivs vorausfahrender Fahrzeuge oder die Ortungssignale stehender Objekte herangezogen werden.

Auf Landstraßen wird man den Fahrschlauch nach beiden Seiten erweitern, damit eine Verfolgung des Zielobjekts auch in engeren Kurven sichergestellt wird. Zur Erkennung des Straßentyps, Autobahn oder Landstraße, kann gegebenenfalls die digitale Karte des Navigationssystems ausgewertet werden.

Im Normalfall läßt sich auf diese Weise eine situationsgerechte Anpassung des Fahrschlauches erreichen. Da jedoch in die Bestimmung des Fahrschlauches und gegebenenfalls auch in die Kursprädiktion die Bewegungsdaten der vorausfahrenden Fahrzeuge einfließen, können abbiegende Fahrzeuge an Autobahnausfahrten, Kreuzungen oder Einmündungen zu einer Fehlinterpretation der Situation und damit zu einer Fehlfunktion des Fahrerassistenzsystems führen. Dies gilt nicht nur für ACC-Systeme, sondern beispielsweise auch für Sicherheitssysteme (PSS; Predictive Safety System), die den Fahrer vor einer Kollisionsgefahr warnen oder gegebenenfalls aktiv in die Fahrzeugführung eingreifen, um die Kollision zu vermeiden oder zumindest deren Folgen zu mildern.

Aus der DE 100 47 746 A1 ist ein Verfahren zur Längsregelung eines Fahrzeuges bekannt, bei dem Informationen eines Navigationssystems erfasst werden und bei dem abhängig von den Informationen des Navigationssystems ein Sollwert mindestens eines Parameters zur Längsregelung bestimmt wird. Bei einem Längsregelvorgang aufgrund eines vorgegebenen Sollabstandes zu einem vorausfahrenden Fahrzeug wird mittels der Informationen des Navigationssystems die Wahrscheinlichkeit ermittelt, mit der das vorausfahrende Fahrzeug und/oder das eigene Fahrzeug eine Kurve befährt, wenn das vorausfahrende Fahrzeug nicht mehr erkannt wird. Wenn die Wahrscheinlichkeit größer als eine vorgegebene Schwelle ist, wird eine Längsbeschleunigung zeitlich verzögert vorgenommen.

### Vorteile der Erfindung

Durch die Erfindung mit den in den unabhängigen Ansprüchen angegebenen Merkmalen wird eine größere Robustheit des Fahrerassistenzsystems bei Abbiegevorgängen vorausfahrender Fahrzeuge erreicht.

Erfindungsgemäß wird anhand der von der digitalen Karte eines Navigationssystems gelieferten Informationen über das Straßennetz geprüft, ob in der aktuellen Situation eine Abbiegemöglichkeit besteht, und wenn dies der Fall ist, werden die dynamischen Daten der vorausfahrenden Fahrzeuge, zumindest des Fahrzeugs, das das Zielobjekt für die Abstandsregelung bildet, daraufhin überprüft, ob sie auf einen bevorstehenden Abbiegevorgang des betreffenden Fahrzeugs hindeuten. Aus diesen Daten, insbesondere der Relativgeschwindigkeit, der Verzögerung und der Querbewegung des vorausfahrenden Fahrzeugs, wird ein Parameter berechnet, der die Abbiegewahrscheinlichkeit für das Fahrzeug angibt. Diese Abbiegewahrscheinlichkeit kann dann bei der Interpretation der Verkehrssituation berücksichtigt werden, so daß die Gefahr von Fehlinterpretationen und Fehlreaktionen reduziert wird.

Vorteilhafte Ausgestaltungen und Weiterbildungen der Erfindung sind in den Unteransprüchen angegeben.

Wenn die Bewegungsdaten vorausfahrender Fahrzeuge zur Kursprädiktion, zur Bestimmung der von dem eigenen Fahrzeug befahrenen Spur einer mehrspurigen Fahrbahn und/oder zur Festlegung der Grenzen des Fahrschlauches herangezogen werden, so lassen sich die Bewegungsdaten der Fahrzeuge, für die eine hohe Abbiegewahrscheinlichkeit besteht, eliminieren oder geringer gewichteten, so daß die "anomalen" Querbewegungen der abbiegenden Fahrzeuge nicht zu einer falschen Bestimmung des Fahrschlauches führen.

Bei einem ACC-System kann darüber hinaus der Fahrschlauch auf der Seite, nach der das vorausfahrende Fahrzeug voraussichtlich abbiegen wird, verengt werden. Dies hat den Vorteil, daß das abbiegende Fahrzeug früher den in dieser Weise verengten Fahrschlauch verlassen wird und dann nicht mehr bei der Abstandsregelung berücksichtigt wird, so daß dann schneller das nächste, nicht abbiegende Fahrzeug als Zielobjekt ausgewählt werden kann oder, falls ein solches Fahrzeug nicht vorhanden ist, wieder auf die vom Fahrer gewählte Wunschgeschwindigkeit beschleunigt werden kann. Hierdurch wird insbesondere auf Landstraßen und im Stadtverkehr eine zügigere, den Verkehrsfluß fördernde Fahrweise erreicht.

Ergänzend oder alternativ kann die Abbiegewahrscheinlichkeit auch in die sogenannte Objektplausibilisierung einfließen. Unter Objektplausibilisierung versteht man den Verarbeitungsschritt, bei dem angesichts der unvermeidlichen Meßungenauigkeiten des Ortungssystems und anhand des prädizierten Fahrschlauches eine Wahrscheinlichkeit dafür berechnet wird, daß sich das geortete Objekt innerhalb des Fahrschlauches befindet. Bei hoher Abbiegewahrscheinlichkeit wird dann dieser
Plausibilisierungsparameter reduziert, so daß das betreffende Objekt früher als Zielobjekt für die Abstandsregelung verworfen wird.

Weiterhin kann die Abbiegewahrscheinlichkeit auch zu einer Modifikation der Eintauchstrategie führen, das ist die Strategie, die bestimmt, wie weit bei einer Verzögerung des vorausfahrenden Fahrzeugs der normale Sicherheitsabstand vorübergehend unterschritten werden kann, um unkomfortabel hohe Verzögerungen oder Beschleunigungen des eigenen Fahrzeugs zu vermeiden und den Verkehrsfluß zu "glätten".

Die Berechnung der Abbiegewahrscheinlichkeit beruht vorzugsweise auf einem oder mehreren der nachstehenden Kriterien.

Ein Geschwindigkeitskriterium bewertet, wie stark die Geschwindigkeit des Zielobjekts vom erwarteten Wert abweicht. Dahinter steht die Überlegung, daß ein Fahrzeug, das sich auf einen Abbiegevorgang vorbereitet, normalerweise seine Geschwindigkeit verringern wird und damit langsamer fahren wird, als es üblicherweise in der betreffenden Situation zu erwarten wäre. Die erwartete Geschwindigkeit läßt sich unter verschiedenen Gesichtspunkten bestimmen, beispielsweise unter Berücksichtigung des Straßentyps (Autobahn oder Landstraße), des Verkehrsstatus (z. B. innerhalb oder außerhalb geschlossener Ortschaften), der Historie, d. h. der Geschwindigkeit, mit der das betreffende Fahrzeug in der Vergangenheit gefahren ist, und dem Fahrbahnverlauf. Beispielsweise läßt sich bei gekrümmtem Fahrbahnverlauf ein erwarteter Wert für die Geschwindigkeit bestimmen, indem man davon ausgeht, daß der Fahrer des vorausfahrenden Fahrzeugs so langsam fahren wird, daß ein üblicher Grenzwert für die Querbeschleunigung nicht überschritten wird. Aus der bekannten Fahrbahnkrümmung, die sich anhand der Giergeschwindigkeit des eigenen Fahrzeugs und/oder anhand der digitalen Karte des Navigationssystems ermitteln läßt, kann dann die erwartete Geschwindigkeit berechnet werden.

Zweckmäßig wird für jeden der oben genannten Gesichtspunkte zunächst gesondert ein erwarteter Geschwindigkeitswert berechnet, und es wird dann das Minimum dieser Geschwindigkeitswerte gebildet. Wenn die tatsächliche Geschwindigkeit des vorausfahrenden Fahrzeugs, berechnet aus gemessener Relativgeschwindigkeit und Fahrgeschwindigkeit des eigenen Fahrzeugs, dieses Minimum signifikant unterschreitet und außerdem eine Abbiegemöglichkeit besteht, so kann, auf eine Abbiegeabsicht geschlossen werden.

Bei einem Verzögerungskriterium wird die Verzögerung des vorausfahrenden Fahrzeugs ausgewertet. Einem Abbiegevorgang geht typischerweise eine anhaltende Verzögerung des Fahrzeugs voraus. Ein Maß für die Abbiegewahrscheinlichkeit läßt sich daher gewinnen, indem die Dauer der Zeitspanne gemessen wird, in der die Verzögerung des Fahrzeugs dem Betrage nach oberhalb eines bestimmten Schwellenwertes liegt. Alternativ kann die Verzögerung des vorausfahrenden Fahrzeugs über die Zeit integriert und dann dieses Integral als Maß für die Abbiegewahrscheinlichkeit genommen werden.

Ein weiteres Kriterium beruht auf der gemessenen Querbewegung des vorausfahrenden Fahrzeugs. Die Querposition des vorausfahrenden Fahrzeugs in bezug auf die Längsmittelachse des eigenen Fahrzeugs läßt sich anhand des vom Radarsensor gemessenen Azimutwinkels und des Abstands berechnen. Die Ableitung nach der Zeit liefert dann die Quergeschwindigkeit. Die Querposition und die Quergeschwindigkeit können dabei zum prädizierten Fahrbahnverlauf in Beziehung gesetzt werden. Abhängig vom Abstand zur Kreuzung, Einmündung oder Ausfahrt kann eine signifikant erhöhte Quergeschwindigkeit darauf hindeuten, daß das vorausfahrende Fahrzeug den Abbiegevorgang einleitet oder, soweit vorhanden, auf eine Abbiegespur wechselt. Die Information über den Abstand zur Kreuzung oder gegebenenfalls den Beginn der Abbiegespur läßt sich aus den Daten des Navigationssystems gewinnen.

Jedes der oben genannten Kriterien liefert somit eine spezifische Abbiegewahrscheinlichkeit. In einer zweckmäßigen Ausführungsform wird dann als endgültige Abbiegewahrscheinlichkeit ein gewichteter Mittelwert der spezifischen Abbiegewahrscheinlichkeiten gebildet.

### Zeichnung

Ein Ausführungsbeispiel der Erfindung ist in den Zeichnungen
dargestellt und in der nachfolgenden Beschreibung näher
erläutert.

Es zeigen:
- Figur 1: ein Blockdiagramm eines Fahrerassistenzsystems, das für die Durchführung des erfindungsgemäßen Verfahrens ausgebildet ist;
- Figur 2: eine Skizze einer Verkehrssituation zur Erläuterung des Verfahrens; und
- Figur 3: ein Flußdiagramm zur Illustration der wesentlichen Verfahrensschritte.

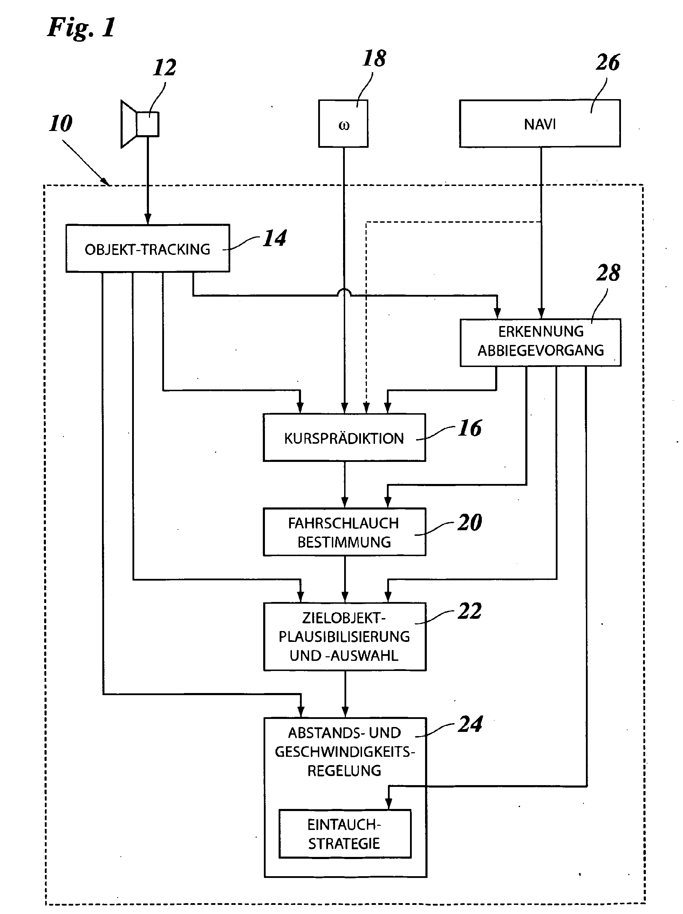

In Figur 1 ist als Beispiel für ein Fahrerassistenzsystems ein ACC-System 10 dargestellt, dessen grundsätzlicher Aufbau und Wirkungsweise als bekannt vorausgesetzt werden können und deshalb hier nur kurz skizziert werden.

Ein vorn im Fahrzeug eingebauter winkelauflösender Radarsensor 12 liefert Ortungsdaten (Abstände, Relativgeschwindigkeiten und Azimutwinkel) der georteten Objekte an das ACC-System 10. Die Meßdaten werden zyklisch, beispielsweise in Abständen von etwa 1 ms aktualisiert. In einem Tracking-Modul 14 werden jeweils die aktuellen Meßdaten mit den Meßdaten aus vorangegangene Meßzyklen abgeglichen, so daß die Bewegungen der einzelnen Objekte verfolgt werden können.

Ein Kursprädiktionsmodul 16 dient zur Abschätzung des voraussichtlichen Kurses des eigenen Fahrzeugs. Hierzu wird im einfachsten Fall nur die Giergeschwindigkeit ω des eigenen Fahrzeugs ausgewertet, die mit Hilfe eines Gierratensensors 18 gemessen wird und in Verbindung mit der Fahrgeschwindigkeit des eigenen Fahrzeugs eine Bestimmung der Fährbahnkrümmung in dem gerade vom eigenen Fahrzeug durchfahrenen Fahrbahnabschnitt ermöglicht.

Im gezeigten Beispiel werden bei der Kursprädiktion zusätzlich die Daten des Trackingmoduls 14 ausgewertet. Der Radarsensor 12 reagiert nicht nur auf vorausfahrende Fahrzeuge, sondern auch auf stehende Objekte sowie auf Gegenverkehr. Die vorausfahrenden Fahrzeuge lassen sich jedoch anhand der Beziehung zwischen ihrer Relativgeschwindigkeit und der Fahrgeschwindigkeit des eigenen Fahrzeugs identifizieren. Wenn ein oder mehrere vorausfahrende Fahrzeuge geortet werden, so läßt sich eine bevorstehende Kurve bereits daran erkennen, daß die vorausfahrenden Fahrzeuge als Kollektiv eine Querbewegung ausführen, auch wenn das eigene Fahrzeug noch nicht in die Kurve eingefahren ist und somit die Gierrate ω noch praktisch gleich null ist.

Anhand des prädizierten Kurses wird dann in einem Fahrschlauchmodul 20 ein Fahrschlauch bestimmt, innerhalb dessen sich diejenigen Fahrzeuge befinden müssen, die als Zielobjekt für die Abstandsregelung in Frage kommen. Im einfachsten Fall handelt es sich bei diesem Fahrschlauch um einen Streifen mit einer gewissen Standardbreite, der dem prädizierten Kurs folgt. Anhand der Daten des Trackingmoduls 14 läßt sich jedoch auch erkennen, wie viele Spuren die von dem eigenen Fahrzeug befahrene Fahrbahn hat und auf welcher dieser Spuren sich das eigene Fahrzeug befindet. Beispielsweise kann zu diesem Zweck geprüft werden, ob vorausfahrende Fahrzeuge vorhanden sind, die über einen längeren Zeitraum einen Querversatz zum eigenen Fahrzeug aufweisen, der etwa einer üblichen Spurbreite entspricht. Ebenso kann ausgewertet werden, wie oft das eigene Fahrzeug überholt wurde oder wie oft es seinerseits Fahrzeuge auf der rechten Nebenspur überholt hat. Abhängig von der so erkannten Anzahl der Fahrspuren und abhängig davon, auf welcher Spur sich das eigene Fahrzeug befindet, wird dann gegebenenfalls der Fahrschlauch einseitig oder beidseitig erweitert oder verengt.

In einem Plausibilisierungsmodul 22 werden dann die georteten und im Trackingmodul 14 verfolgten Objekte plausibilisiert, d. h., für jedes Objekt wird eine Wahrscheinlichkeit dafür angegeben, daß es sich innerhalb des Fahrschlauches befindet. Dabei wird berücksichtigt, daß die Ortungsdaten, insbesondere die Querpositionsdaten, gewisse Fehlertoleranzen aufweisen, die mit zunehmendem Objektabstand größer werden. Wenn die Wahrscheinlichkeit dafür, daß sich das Objekt innerhalb des Fahrschlauches befindet, oberhalb eines bestimmten Schwellenwertes liegt, wird das Objekt "plausibilisiert", d. h., es wird als ein relevantes Objekt behandelt, das sich auf der eigenen Fahrspur befindet. Unter den so plausibilisierten Objekten wird dann schließlich dasjenige mit dem kleinsten Abstand als Zielobjekt für die Abstandsregelung ausgewählt.

In einem Regelmodul 24 erfolgt anhand der Ortungsdaten des Zielobjekts die eigentliche Abstandsregelung durch Eingriff in das Antriebssystem und erforderlichenfalls auch das Bremssystem des Fahrzeugs, so daß das Zielobjekt mit einer vom Fahrer innerhalb gewisser Grenzen wählbaren Zeitlücke verfolgt wird. In dem Regelalgorithmus ist üblicherweise eine Eintauchstrategie implementiert, die es zuläßt, daß beispielsweise bei einem Bremsmanöver des Zielobjekts das eigene Fahrzeug nicht sofort und nicht in gleichem Ausmaß gebremst wird, sondern vorübergehend in den durch die Zeitlücke bestimmten SollSicherheitsabstand eintaucht.

Das hier beschriebene ACC-System 10 weist eine Schnittstelle zu einem Navigationssystem 26 des Fahrzeugs auf. Dieses Navigationssystem enthält eine in digitaler Form gespeicherte Straßenkarte und ermittelt mit Hilfe eines GPS-Systems (Global Positioning System) die aktuelle Position des eigenen Fahrzeugs, so daß im ACC-System auch Informationen über den Straßentyp (Autobahn oder Landstraße) sowie über bevorstehende Ausfahrten, Kreuzungen, Einmündungen, Kurven und dergleichen zur Verfügung stehen. Wie in Figur 1 durch einen gestrichelten Pfeil angedeutet wird, können die Daten des Navigationssystems 26 auch zur Kursprädiktion im Kursprädiktionsmodul 16 herangezogen werden. Dennoch ist es zweckmäßig, zur Kursprädiktion auch die Ortungsdaten des Kollektivs der georteten Fahrzeuge heranzuziehen, da das Navigationssystem die Fahrbahnkrümmung und die Position des eigenen Fahrzeugs nur mit begrenzter Genauigkeit angibt und durch Fusion mit den Daten des Trackingmoduls 14 die Genauigkeit und Verläßlichkeit der Kursprädiktion verbessert werden kann.

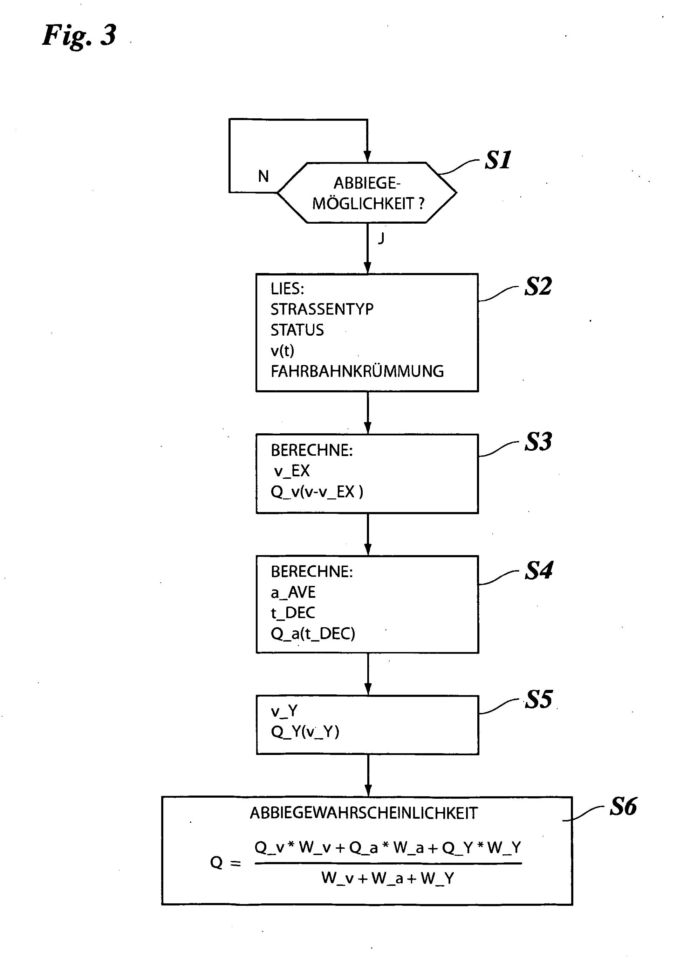

Erfindungsgemäß weist das ACC-System 10 ein Erkennungsmodul 28 zur Erkennung von Abbiegevorgängen auf. Anhand der Daten des Navigationssystems 26 wird im Erkennungsmodul 28 zunächst geprüft, ob und in welchem Abstand eine Abbiegemöglichkeit besteht. Wenn sich das eigene Fahrzeug kurz vor einer Autobahnausfahrt, einer Einmündung oder Kreuzung befindet, so wertet das Erkennungsmodul 28 die vom Trackingmodul 14 gelieferten Ortungsdaten der vorausfahrenden Fahrzeuge daraufhin aus, ob das Bewegungsmuster eines dieser Fahrzeuge, insbesondere das des verfolgten Zielobjekts, auf einen bevorstehenden Abbiegevorgang hindeutet. Der Auswertealgorithmus wird später im Zusammenhang mit Figur 3 näher erläutert werden. Das Ergebnis der Auswertung ist eine bestimmte Abbiegewahrscheinlichkeit. Im Prinzip kann eine solche Abbiegewahrscheinlichkeit für jedes geortete Fahrzeug berechnet werden. Der Einfachheit halber soll hier jedoch angenommen werden, daß nur die Abbiegewahrscheinlichkeit für das Zielobjekt berechnet wird.

Diese Abbiegewahrscheinlichkeit kann zum einen im Kursprädiktionsmodul 16 dazu benutzt werden, die Auswertung der Querbewegungen des Kollektivs der georteten Fahrzeuge zu modifizieren. Wenn die Abbiegewahrscheinlichkeit oberhalb eines bestimmten Schwellenwertes liegt, wird das betreffende Objekt aus dem betrachteten Kollektiv eliminiert, so daß die Kursprädiktion nicht durch das abbiegende Fahrzeug verfälscht wird. Alternativ kann das Gewicht, mit dem das Zielobjekt in die Querbewegung des Kollektivs einfließt, entsprechend der Abbiegewahrscheinlichkeit reduziert werden. Auf diese Weise wird in Gegenwart von abbiegenden Fahrzeugen die Genauigkeit der Kursprädiktion verbessert.

Auf analoge Weise wird die Abbiegewahrscheinlichkeit auch im Fahrschlauchmodul 20 ausgewertet, nämlich bei der Bestimmung der Anzahl der Fahrspuren und bei der Bestimmung der Spur, auf der das eigene Fahrzeug fährt. So kann z. B., wenn das Zielobjekt auf eine Abbiegespur ausschert, verhindert werden, daß im Fahrschlauchmodul 20 fälschlich angenommen wird, es sei eine zusätzliche Nebenspur vorhanden. Da das Fahrschlauchmodul 20 die Ortungsdaten der Objekte einer statistischen Auswertung unterzieht und sich dabei auch noch an relativ lange zurückliegende Ereignisse "erinnert", läßt sich so insbesondere verhindern, daß das Fahrschlauchmodul fälschlich von der Existenz einer Nebenspur ausgeht, wenn das eigene Fahrzeug die Kreuzung längst passiert hat und keine Abbiegespur mehr vorhanden ist.

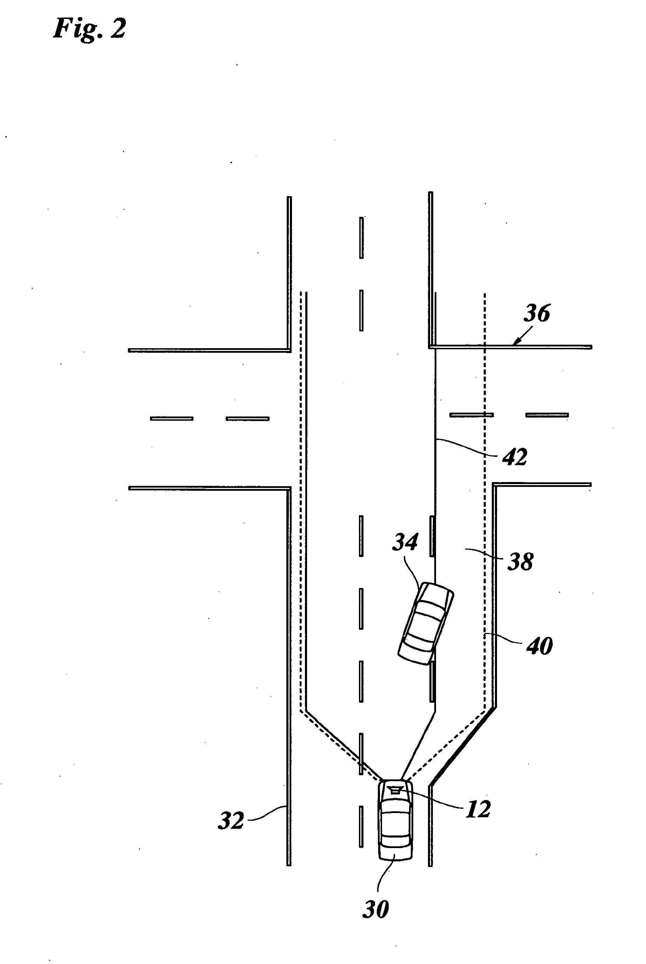

Andererseits kann die Abbiegewahrscheinlichkeit im Fahrschlauchmodul 20 auch unmittelbar Einfluß auf die Konfiguration des Fahrschlauches haben, wie später im Zusammenhang mit Figur 2 noch näher erläutert werden wird.

Weiterhin kann die Abbiegewahrscheinlichkeit im Plausibilisierungsmodul 22 bei der Zielobjektplausibilisierung und -auswahl berücksichtigt werden, mit dem Ergebnis, daß das abbiegende Fahrzeug nicht unnötig lange als Zielobjekt behandelt wird, sondern rasch auf ein neues Zielobjekt oder auf Freifahrt (Regelung auf die Wunschgeschwindigkeit) umgeschaltet wird.

Schließlich beeinflußt die Abbiegewahrscheinlichkeit im gezeigten Beispiel auch die Eintauchstrategie im Regelmodul 24. Wenn mit hinreichender Sicherheit feststeht, daß das bisherige Zielobjekt abbiegen wird, ist ein tieferes Eintauchen in den Sicherheitsabstand akzeptabel und angemessen.

Es versteht sich, daß die Erkennung von Abbiegevorgängen im Erkennungsmodul 28 noch erheblich verbessert werden kann, wenn das Fahrzeug zusätzlich mit einem Videosystem ausgerüstet und somit in der Lage ist, den Fahrtrichtungsanzeiger (Blinker) des vorausfahrenden Fahrzeugs zu erkennen. Auch in dem Fall ist jedoch die Auswertung der vom Trackingmodul 14 gelieferten Ortungsdaten im Erkennungsmodul 28 sinnvoll, weil dadurch eine größere Verläßlichkeit und Sicherheit bei der Bewertung der Abbiegewahrscheinlichkeit erreicht wird.

Figur 2 illustriert eine Situation, in der ein mit dem ACC-System 10 nach Figur 1 ausgerüstetes Fahrzeug 30 auf einer Landstraße oder städtischen Straße 32 mit nur einer Spur je Fahrtrichtung fährt und ein vorausfahrendes Fahrzeug 34 als Zielobjekt verfolgt. Die beiden Fahrzeuge nähern sich gerade einer Kreuzung 36, an der eine Abbiegemöglichkeit besteht. Das Fahrzeug 34 hat seine Geschwindigkeit verringert und ist im Begriff, auf eine Abbiegespur 38 auszuscheren. Das Erkennungsmodul 28 ist anhand der Daten des Navigationssystems 26 über die Abbiegemöglichkeit informiert und erkennt anhand des Bewegungsmusters des Fahrzeugs 34, daß dieses Fahrzeug voraussichtlich abbiegen wird.

In gestrichelten Linien ist in Figur 2 ein Fahrschlauch 40 eingezeichnet, der im Fahrschlauchmodul 20 bestimmt wurde. Da das Fahrschlauchmodul erkannt hat, daß die Straße 32 nur eine Spur je Fahrtrichtung hat, ist der Fahrschlauch 40 symmetrisch zu Längsachse des Fahrzeugs 30 erweitert, so daß Zielobjekte auch noch auf kurvenreichen Strecken sicher verfolgt werden können. Da jedoch nun vom Erkennungsmodul 28 eine hohe Abbiegewahrscheinlichkeit für das Fahrzeug 34 erkannt wird, geht das Fahrschlauchmodul 20 zu einem einseitig, nämlich auf der rechten Seite, verengten Fahrschlauch 42 über, dessen rechte Grenze nur noch knapp außerhalb der vom eigenen Fahrzeug 30 befahrenen Spur liegt. Dies hat die vorteilhafte Wirkung, daß das Fahrzeug 34 im Plausibilisierungsmodul 22 nicht mehr als Zielobjekt behandelt wird, sobald es den Wechsel auf die Abbiegespur 38 vollzogen hat. Das eigene Fahrzeug 30 kann daher ohne unnötigen Zeitverzug wieder auf die Wunschgeschwindigkeit beschleunigen und dabei gegebenenfalls noch das Fahrzeug 34 überholen, bevor dieses endgültig abgebogen ist.

Ein solcher Überholvorgang (ohne vorausgegangenen Spurwechsel des eigenen Fahrzeugs 30) würde normalerweise vom Fahrschlauchmodul 20 so interpretiert, als befinde sich das eigene Fahrzeug 30 nunmehr auf der linken Spur einer zweispurigen Fahrbahn. Dies hätte zur Folge, daß das Fahrschlauchmodul den verengten Fahrschlauch 42 auch dann beibehält, wenn die Kreuzung 36 längst passiert wurde. Da hier jedoch durch das Erkennungsmodul 28 erkannt wurde, daß das Fahrzeug 34 abbiegt, "weiß" das Fahrschlauchmodul 20, daß es sich bei der vermeintlichen Nebenspur um eine Abbiegespur handelt, und es kehrt deshalb nach Passieren der Kreuzung 36 wieder zu dem symmetrischen Fahrschlauch 40 zurück. Die vom Radarsensor 12 erkannte Querbewegung des Fahrzeugs 34 führt auch nicht dazu, daß in dem Kursprädiktionsmodul 16 fälschlich eine bevorstehende Rechtskurve der Straße 32 angenommen wird und dann der Fahrschlauch entsprechend gekrümmt wird.

In Figur 3 illustriert als Flußdiagramm eine Prozedur, die periodisch im Erkennungsmodul 28 ausgeführt wird, um einen bevorstehenden Abbiegevorgang des verfolgten Zielobjekts zu erkennen und eine Abbiegewahrscheinlichkeit zu berechnen.

In Schritt S1 wird anhand der Daten des Navigationssystems 26 geprüft, ob in dem unmittelbar vorausliegenden Streckenabschnitt eine Abbiegemöglichkeit besteht. Wenn dies nicht der Fall ist, wird der Schritt S1 periodisch wiederholt, so lange, bis eine Abbiegemöglichkeit erkannt wird.

Wenn eine Abbiegemöglichkeit besteht, werden in Schritt S2 die folgenden Daten gelesen: der Straßentyp, der z. B. angibt, ob es sich bei der vom eigenen Fahrzeug befahrenen Straße um eine Autobahn oder eine einspurige Landstraße handelt, der aktuelle Verkehrsstatus, z. B. innerhalb oder außerhalb-einer geschlossenen Ortschaft, die Historie, d. h. der zeitliche Verlauf der Absolutgeschwindigkeit v des verfolgten Zielobjekts, und die Fahrbahnkrümmung am Ort des Zielobjekts.

Die Information über den Straßentyp liefert das Navigationssystem 26 und/oder das Fahrschlauchmodul 20. Die Information über den Verkehrsstatus liefert das Navigationssystem 26. Die Absolutgeschwindigkeit v(t), die das Zielobjekt in der jüngeren Vergangenheit hatte, ergibt sich aus der vom Trackingmodul 14 gemeldeten Relativgeschwindigkeit in Verbindung mit der Fahrgeschwindigkeit des eigenen Fahrzeugs. Die Fahrbahnkrümmung läßt sich aus den Daten des Navigationssystems 26 und/oder (näherungsweise) aus den Daten des Giergeschwindigkeitssensors 18 bestimmen.

In Schritt S3 wird dann jeder der in Schritt S2 gelesenen Größen ein spezifischer Schätzwert für die Geschwindigkeit (Absolutgeschwindigkeit) zugeordnet, die für das Zielobjekt zu erwarten wären, wenn es nicht abbiegen würde. Für den Straßentyp "Laridstraße" wäre dies in Deutschland beispielsweise eine Geschwindigkeit von 100 km/h, für Autobahnen die im betreffenden Einsatzgebiet zugelassene Höchstgeschwindigkeit auf Autobahnen (in Deutschland also unendlich). Die jeweils geltenden Höchstgeschwindigkeiten können anhand der vom Nävigationssystem gelieferten Positionsdaten in einer Ländertabelle nachgeschlagen werden. Entsprechend wäre dem Verkehrsstatus "geschlossene Ortschaft" in Deutschland ein Schätzwert von 50 km/h zugeordnet. Sofern es sich bei den Navigationssystemen 26 um ein fortgeschrittenes System handelt, das auch die auf Landstraßen oder Autobahnen im jeweiligen Streckenabschnitt bestehenden Höchstgeschwindigkeiten angibt, wird der Größe "Verkehrsstatus" die jeweilige Höchstgeschwindigkeit zugeordnet.

Der Größe v(t) wird z.B. ein Schätzwert zugeordnet, der dem zeitlichen Mittel der vom Zielobjekt in der letzten Zeit gefahrenen Geschwindigkeit entspricht. Die Größe "Fahrbahnkrümmung" trägt dem Umstand Rechnung, daß das Zielobjekt vor und in Kurven langsamer fahren wird als auf gerader Strecke. Dabei wird davon ausgegangen, daß die Geschwindigkeit so weit reduziert wird, daß die aufgrund der Fahrbahnkrümmung entstehende Querbeschleunigung einen üblichen Grenzwert nicht überschreitet. Gegebenenfalls kann dabei auch auf die "Historie" der Geschwindigkeitsdaten zurückgegriffen werden, so daß der Grenzwert für die Querbeschleunigung an das bisherige Verhalten des Fahrers des vorausfahrenden Fahrzeugs angepaßt werden kann. Aus dem angenommenen Grenzwert für die Querbeschleunigung und der aktuellen Fahrbahnkrümmung wird dann der Schätzwert für die Geschwindigkeit so berechnet, daß die Querbeschleunigung gerade dem Grenzwert entspricht. Das Minimum der auf diese Weise erhaltenen vier Schätzwerte für die Geschwindigkeit bildet dann die erwartete Geschwindigkeit v_EX. Aus der Differenz zwischen der erwarteten Geschwindigkeit v_EX und der aktuellen Geschwindigkeit v des Zielobjekts wird dann gemäß einer fest vorgegebenen Funktion (Funktionsvorschrift oder Tabelle) eine spezifische Abbiegewahrscheinlichkeit Q_v berechnet. Je weiter die tatsächliche Geschwindigkeit unter v_EX liegt, desto größer ist die Äbbiegewahrscheinlichkeit.

In Schritt S4 wird eine weitere spezifische
Abbiegewahrscheinlichkeit Q_a auf der Grundlage des Verzögerungsverhaltens des Zielobjekts berechnet. Dazu wird zunächst aus den gemessenen Absolutgeschwindigkeiten des Zielobjekts mit einer geeigneten Zeitkonstanten ein Mittelwert a_AVE für die Verzögerung (negative Beschleunigung) des Zielobjekts berechnet. Wenn der Betrag dieser mittleren Verzögerung einen bestimmten Schwellenwert überschreitet, wird ein Zeitgeber gestartet, und in den aufeinanderfolgenden Durchlaüfzyklen der in Figur 3 gezeigten Routine wird dann fortlaufend die Zeit t_DEC gemessen, während der die mittlere Beschleunigung a_AVE oberhalb des Schwellenwertes bleibt. Die spezifische Abbiegewahrscheinlichkeit Q_a ist dann eine monoton wachsende Funktion von t_DEC, d. h., die Abbiegewahrscheinlichkeit ist um so größer, je länger die Verzögerung des Zielobjekts andauert.

In Schritt S5 wird noch eine weitere spezifische Abbiegewahrscheinlichkeit Q_Y auf der Grundlage der Querbewegungen des Zielobjekts berechnet. Dazu wird zunächst die Quergeschwindigkeit v_Y des Zielobjekts gemessen, und die Abbiegewahrscheinlichkeit Q_Y ist dann eine monoton wachsende Funktion dieser Quergeschwindigkeit, d. h., die
Abbiegewahrscheinlichkeit ist um so größer, je schneller sich das Zielobjekt zur Seite bewegt. Gemäß einer Verfeinerung kann hier berücksichtigt werden, wie weit das Zielobjekt noch von der Abbiegemöglichkeit oder, sofern die Daten des Navigationssystems das Vorhandensein einer Abbiege- oder Verzögerungsspur anzeigen, vom Beginn dieser Verzögerungsspur entfernt ist.

In Schritt S6 wird dann schließlich aus den spezifischen Abbiegewahrscheinlichkeiten Q_v, Q_a und Q_Y, die in Schritten S3 bis S5 berechnet wurden, eine endgültige Abbiegewahrscheinlichkeit Q berechnet, indem ein gewichteter Mittelwert der spezifischen Abbiegewahrscheinlichkeiten mit Gewichtsfaktoren W_v, W_a und W_Y gebildet wird.

## Patentansprüche

1. Verfahren für ein Fahrerassistenzsystem (10) eines Kraftfahrzeugs (30), aufweisend die folgenden Schritte:
- Prüfen, ob eine Abbiegemöglichkeit (36) besteht, anhand einer digitalen Karte eines Navigationssystems (26) und
- wenn eine Abbiegemöglichkeit besteht, Berechnen einer
Abbiegewahrscheinlichkeit (Q) für ein vorausfahrendes Fahrzeug, **dadurch gekennzeichnet, dass** die Abbiegewahrscheinüchkeit ermittelt wird durch Auswerten der von einem Ortungssystem (12) gemessenen dynamischen Daten des vorausfahrenden Fahrzeugs (34).

2. Verfahren nach Anspruch 1, **dadurch gekennzeichnet, daß** die
Abbiegewahrscheinlichkeit (Q) eine Kombination mehrere spezifischer Abbiegewahrscheinlichkeiten (Q_v, Q_a, Q_Y) ist, die jeweils anhand unterschiedlicher Kriterien bestimmt werden.

3. Verfahren nach Anspruch 2, **dadurch gekennzeichnet, daß** eine der spezifischen
Abbiegewahrscheinlichkeiteri (Q_v) eine Funktion der Differenz zwischen der tatsächlichen Geschwindigkeit (v) des vorausfahrenden Fahrzeugs und eine erwarteten Geschwindigkeit (v_EX) dieses Fahrzeugs ist, die für ein nicht abbiegendes Fahrzeug zu erwarten wäre.

4. Verfahren nach Anspruch 3, **dadurch gekennzeichnet, daß** die erwartete Geschwindigkeit (v_EX) das Minimum von zwei oder mehr Schätzwerten ist, die jeweils anhand eines der folgenden Parameter bestimmt werden: Straßentyp, Verkehrsstatus (z. B. geschlossene Ortschaft, bestehende Geschwindigkeitsbeschränkung), bisherige Geschwindigkeit des vorausfahrenden Fahrzeugs, Fahrbahnkrümmung.

5. Verfahren nach einem der Ansprüche 2 bis 4, **dadurch gekennzeichnet, daß** eine der spezifischen Abbiegewahrscheinlichkeiten (Q_a) anhand der gemessenen Verzögerung des vorausfahrenden Fahrzeugs (34) berechnet wird.

6. Verfahren nach einem der Ansprüche 2 bis 5, **dadurch gekennzeichnet, daß** eine der spezifischen Abbiegewahrscheinlichkeiten (v_Q) anhand der gemessenen Querbewegung des vorausfahrenden Fahrzeugs (34) berechnet wird.

7. Fahrerassistenzsystem für Kraftfahrzeuge, **dadurch gekennzeichnet, daß** es zur Durchführung des Verfahrens nach einem der Ansprüche 1 bis 6 ausgebildet ist.

8. Fahrerassistenzsystem nach Anspruch 7, **gekennzeichnet durch** ein Prädiktionsmodul (16) zur Berechnung des voraussichtlichen Kurses des eigen Fahrzeugs (30) unter Berücksichtigung der Ortungsdaten eines oder mehrerer vorausfahrender Fahrzeuge (34), welches Prädiktionsmodul (16) dazu ausgebildet ist, Ortungsdaten von vorausfahrenden Fahrzeugen, für die eine hohe Abbiegewahrscheinlichkeit besteht, bei der Kursprädiktion unberücksichtigt zu lassen oder geringer zu gewichten.

9. Fahrerassistenzsystem nach Anspruch 6 oder 7, **gekennzeichnet durch** ein Fahrschlauchmodul (20), das dazu ausgebildet ist, unter Berücksichtigung der Ortungsdaten eines oder mehrerer vorausfahrender Fahrzeuge (34) zu erkennen, wieviele Fahrspuren die derzeit befahrene Richtungsfahrbahn aufweist und/oder auf welcher Fahrspur sich das eigene Fahrzeug (30) befindet, und in Abhängigkeit davon die Konfiguration eines Fahrschlauches (40, 42) zu bestimmten, und das weiterhin dazu ausgebildet ist, bei der Bestimmung der Anzahl der Fahrspuren und/oder der von dem eigenen Fahrzeug (30) befahrenen Spur diejenigen vorausfahrenden Fahrzeuge unberücksichtigt zu lassen oder geringer zu gewichten, für die ein hohe Abbiegewahrscheinlichkeit besteht.

10. Fahrerassistenzsystem nach einem der Ansprüche 6 bis 8, mit einem Abstands- und Geschwindigkeitsregelmodul (24) zur Regelung des Abstands zu einem als Zielobjekt verfolgten vorausfahrenden Fahrzeug (34), das sich innerhalb eines von einem Fahrschlauchmodul (20) festgelegten Fahrschlauches (40, 42) befindet, **dadurch gekennzeichnet, daß** das Fahrschlauchmodul (20) dazu ausgebildet ist, die Konfiguration des Fahrschlauches (40, 42) in Abhängigkeit von der Abbiegewahrscheinlichkeit des Zielobjekts (34) zu variieren.

11. Fahrerassistenzsystem nach einem der Ansprüche 6 bis 9, mit einem Abstands- und Geschwindigkeitsregelmodul (24) zur Regelung des Abstand zu einem als Zielobjekt verfolgten vorausfahrenden Fahrzeug (34) und einem Plausibilisierungsmtidul (22) zur Bestimmung eines Plausibilisierungsparameters, der die Wahrscheinlichkeit angibt, mit der sich ein als Zielobjekt verfotgtes vorausfahrendes Fahrzeug (34) innerhalb eines von einem Fahrschlauchmodul (20) bestimmten Fahrschlauches (40, 42) befindet, **dadurch gekennzeichnet, daß** das Plausibilisierungsmodul (22) dazu ausgebildet ist, den Plausibilisierungsparameter in Abhängigkeit von der Abbiegewahrscheinlichkeit des Zielobjekts zu variierten.

12. Fahrerassistenzsystem nach einem der Ansprüche 6 bis 10, mit einem Abstands- und Regelmodul (24) zur Regelung des Abstands zu einem als Zielobjekt verfolgen vorausfahrenden Fahrzeug (34), in dem eine Eiritauchstrategie implementiert ist, die bestimmt, wie weit ein vorgegebener Sicherheitsabstand zum Zielobjekt (34) bei einer Verzögerung des Zielobjekts vorübergehend unterschritten werden darf, **dadurch gekennzeichnet, daß** das Abstands- und Regelmodul (24) dazu ausgebildet ist, die Eintauchstrategie in Abhängigkeit von der Abbiegewahrscheinlichkeit des Zielobjekts (34) zu variieren.

## Claims

1. Method for a driver assistance system (10) of a motor vehicle (30), having the following steps:
- checking whether there is a turning possibility (36) by reference to a digital map of a navigation system (26), and
- if there is a turning possibility, calculation of a turning probability (Q) for a vehicle travelling ahead, **characterized in that** the turning probability is determined by evaluating the dynamic data, measured by a locating system (12), of the vehicle (34) travelling ahead.

2. Method according to Claim 1, **characterized in that** the turning probability (Q) is a combination of a plurality of specific turning probabilities (Q_v,Q_a,Q_Y) which are each determined on the basis of different criteria.

3. Method according to Claim 2, **characterized in that** one of the specific turning probabilities (Q_v) is a function of the difference between the actual speed (v) of the vehicle travelling ahead and an expected speed (v_EX) of this vehicle which would be expected for a vehicle which is not turning.

4. Method according to Claim 3, **characterized in that** the expected speed (v_EX) is the minimum of two or more estimated values which are each determined by reference to one of the following parameters: type of road, traffic status (for example enclosed locality, existing speed limit), previous speed of the vehicle travelling ahead, curvature of the carriageway.

5. Method according to one of Claims 2 to 4, **characterized in that** one of the specific turning probabilities (Q_a) is calculated by reference to the measured delay of the vehicle (34) travelling ahead.

6. Method according to one of the preceding Claims 2 to 5, **characterized in that** one of the specific turning probabilities (v_Q) is calculated by reference to the measured lateral movement of the vehicle (34) travelling ahead.

7. Driver assistance system for motor vehicles, **characterized in that** it is designed to carry out the method according to one of Claims 1 to 6.

8. Driver assistance system according to Claim 7, **characterized by** a prediction module (16) for calculating the anticipated course of the driver's own vehicle (30) taking into account the locating data of one or more vehicles (34) travelling ahead, which prediction module (16) is designed to exclude from the course prediction locating data of vehicles travelling ahead for which there is a high turning probability, or to give said locating data a lower weighting in the course prediction.

9. Driver assistance system according to Claim 6 or 7, **characterized by** a driving tube module (20) which is designed to detect, by taking into account the locating data of one or more vehicles (34) travelling ahead, how many lanes the carriageway which is currently being travelled on has and/or on which lane the driver's own vehicle (30) is located, and to determine as a function thereof the configuration of a driving tube (40, 42), and which is also designed to exclude from the determination of the number of lanes and/or of the lane which is being travelled in by the driver's own vehicle (30) those vehicles travelling ahead for which there is a high turning probability, or to give said vehicles a lower weighting in the determination.

10. Driver assistance system according to one of Claims 6 to 8, having an adaptive cruise control module (24) for controlling the distance from a vehicle (34) which is travelling ahead and is being pursued as a target object and which is located within the driving tube (40, 42) defined by a driving tube module (20), **characterized in that** the driving tube module (20) is designed to vary the configuration of the driving tube (40, 42) as a function of the turning probability of the target object (34).

11. Driver assistance system according to one of Claims 6 to 9, having an adaptive cruise control module (24) for controlling the distance from a vehicle (34) which is travelling ahead and is being pursued as a target object, and a plausibility-checking module (22) for determining a plausibility-checking parameter which indicates the probability that a vehicle (34) which is travelling ahead and is being pursued as a target object is located within a driving tube (40, 42) determined by a driving tube module (20), **characterized in that** the plausibility-checking module (22) is designed to vary the plausibility-checking parameter as a function of the turning probability of the target object.

12. Driver assistance system according to one of Claims 6 to 10, having a cruise control module (24) for controlling the distance from a vehicle (34) which is travelling ahead and is being pursued as a target object, in which driver assistance module a dipping strategy is implemented which determines how far a predefined safety distance from the object (34) may be temporarily undershot when the target object decelerates, **characterized in that** the adaptive cruise control module (24) is designed to vary the dipping strategy as a function of the turning probability of the target object (34).

## Revendications

1. Procédé pour système (10) d'assistance au conducteur d'un véhicule automobile (30), comprenant les étapes suivantes :
- vérifier à l'aide d'une carte numérique d'un système de navigation (26) s'il existe une possibilité (36) de changement de direction et
- s'il existe une possibilité de changement de direction, calculer une probabilité (Q) de changement de direction d'un véhicule circulant à l'avant, **caractérisé en ce que**
la probabilité de changement de direction est déterminée par évaluation des données dynamiques, mesurées par un système de localisation (12), du véhicule (34) circulant à l'avant.

2. Procédé selon la revendication 1, **caractérisé en ce que** la probabilité (Q) de changement de direction est une combinaison de plusieurs possibilités spécifiques (Q_v, Q_a, Q_Y) de changement de direction qui sont déterminées chacune à l'aide de critères différents.

3. Procédé selon la revendication 2, **caractérisé en ce que** l'une des possibilités spécifiques (Q_v) de changement de direction est fonction de la différence entre la vitesse effective (v) du véhicule circulant à l'avant et une vitesse attendue (v_EX) de ce véhicule, que l'on attendrait d'un véhicule qui ne change pas de direction.

4. Procédé selon la revendication 3, **caractérisé en ce que** la vitesse attendue (v_EX) est la plus basse de deux ou plusieurs valeurs estimées qui sont chacune déterminées à l'aide de l'un des paramètres suivantes : type de chaussée, état du trafic (par exemple agglomération fermée, présence d'une limitation de vitesse), la vitesse à laquelle le véhicule circulant à l'avant se déplaçait jusque là et la courbe de la voie de circulation.

5. Procédé selon l'une des revendications 2 à 4, **caractérisé en ce que** l'une des probabilités spécifiques (Q_a) de changement de direction est calculée à l'aide du ralentissement mesuré du véhicule (34) circulant à l'avant.

6. Procédé selon l'une des revendications 2 à 5, **caractérisé en ce que** l'une des probabilités spécifiques (v_Q) de changement de direction est calculée à l'aide du déplacement transversal mesuré du véhicule (34) circulant à l'avant.

7. Système d'assistance au conducteur d'un véhicule automobile, **caractérisé en ce qu'**il est configuré en vue d'exécuter le procédé selon l'une des revendications 1 à 6.

8. Système d'assistance au conducteur selon la revendication 7, **caractérisé par** un module prédictif (16) qui calcule la trajectoire prévisible estimée du véhicule propre (30) en tenant compte des données de localisation d'un ou de plusieurs véhicules (34) circulant à l'avant, lequel module prédictif (16) est configuré pour, lors de la prédiction de trajectoire, ne pas tenir compte ou donner une moindre pondération aux données de localisation de véhicules circulant à l'avant et pour lesquels il existe une haute probabilité de changement de direction.

9. Système d'assistance au conducteur selon les revendications 6 ou 7, **caractérisé par** un module (20) de couloir de circulation configuré pour, en tenant compte des données de localisation d'un ou de plusieurs véhicules (34) circulant à l'avant, détecter combien de bandes de circulation le côté de la route sur laquelle on circule présente et/ou sur quelle bande de circulation se trouve le véhicule propre (30), et pour déterminer sur cette base la configuration d'un couloir de circulation (40, 42), et en outre configuré pour, lors de la détermination du nombre des bandes de circulation et/ou de la bande de circulation sur laquelle se déplace le véhicule propre (30), ne pas tenir compte ou donner une moindre pondération aux véhicules circulant à l'avant et pour lesquels il existe une haute probabilité de changement de direction.

10. Système d'assistance au conducteur selon l'une des revendications 6 à 8, doté d'un module (24) de régulation de distance et de vitesse qui régule la distance par rapport à un véhicule (34) circulant à l'avant et suivi en tant qu'objet cible et présent à l'intérieur d'un couloir de circulation (40, 42) défini par un module (20) de couloir de circulation, **caractérisé en ce que** le module (20) de couloir de circulation est configuré pour modifier la configuration du couloir de circulation (40, 42) en fonction de la probabilité de changement de direction de l'objet cible (34).

11. Système d'assistance au conducteur selon l'une des revendications 6 à 9, doté d'un module (24) de régulation de distance et de vitesse qui régule la distance par rapport à un véhicule (34) circulant à l'avant et suivi en tant qu'objet cible et un module (22) de plausibilité qui détermine un paramètre de plausibilité qui indique la probabilité à laquelle un véhicule (34) circulant à l'avant et suivi en tant qu'objet cible se trouve à l'intérieur d'un couloir de circulation (40, 42) déterminé par le module (20) de couloir de circulation, **caractérisé en ce que** le module (22) de plausibilité est configuré pour modifier le paramètre de plausibilité en fonction de la probabilité de changement de direction de l'objet cible.

12. Système d'assistance au conducteur selon l'une des revendications 6 à 10, doté d'un module (24) de distance et de régulation qui régule la distance par rapport à un véhicule (34) circulant à l'avant et suivi comme objet cible, et dans lequel est mise en oeuvre une stratégie d'insertion qui détermine de combien une distance de sécurité prédéterminée par rapport à l'objet cible (34) peut ne pas être atteinte temporairement en cas de ralentissement de l'objet cible, **caractérisé en ce que** le module (24) de distance et de régulation est configuré pour modifier la stratégie d'insertion en fonction de la probabilité de changement de direction de l'objet cible (34).
